# EUROPÄISCHE PATENTSCHRIFT

(11) **EP 1 472 770 B1**
(45) Veröffentlichungstag und Bekanntmachung des Hinweises auf die Patenterteilung: **07.03.2007**
(21) Anmeldenummer: 03708061.1
(22) Anmeldetag: 16.01.2003
(51) Int. Cl.: H02G 11/00

(54) **TRAGBAND SOWIE LEITUNGSFÜHRUNGSANORDNUNG ZUR STATIONÄREN FÜHRUNG VON LEITUNGEN, KABELN OD. DGL.**
CARRYING STRAP AND LINE-GUIDING SYSTEM FOR THE STATIONARY GUIDING OF WIRES, CABLES, OR SIMILAR
BANDE SUPPORT ET UNITE DE CABLAGE POUR LA CONDUITE STATIONNAIRE DE LIGNES, CABLES ET ANALOGUES

(30) Priorität: 07.02.2002 DE 10205129; 14.06.2002 DE 10226719
(43) Veröffentlichungstag der Anmeldung: 03.11.2004
(73) Patentinhaber: Kabelschlepp GmbH, 57074 Siegen (DE)
(72) Erfinder: WEHLER, Herbert, 57290 Neunkirchen (DE); KEMPER, Uwe, 57223 Kreuztal (DE)
(74) Vertreter: Neumann, Ditmar
(86) Internationale Anmeldenummer: PCT/EP2003/000420
(87) Internationale Veröffentlichungsnummer: WO 2003/067729

(56) Entgegenhaltungen:
- EP-A- 0 789 167
- WO-A-98/40645
- DE-A- 10 030 985
- DE-A- 19 860 948

## Beschreibung

Der Gegenstand der Erfindung bezieht sich auf ein Tragband für eine Leitungsführungseinheit, auf eine Leitungsführungseinheit zum Führen von Leitungen, Kabeln od. dgl. sowie auf ein Verfahren zur Herstellung eines Tragbandes.

Moderne Arbeitsmaschinen weisen, gleich ob sie statische und/oder dynamische Arbeitsvorgänge ausführen, eine Vielzahl von elektrischen, hydraulischen und/oder pneumatischen Zu- und Ableitungen auf, beispielsweise zur Steuerung beweglicher Verbraucher. Zum Führen solcher Leitungen, insbesondere von einem ortsfesten Anschlusspunkt zu einem beweglichen Verbraucher, werden sogenannte Leitungsführungselemente verwendet

Leitungsführungseinheiten zur Führung von Leitungen, Kabeln od. dgl. mit einem ersten Ende, das ortsfest angeordnet ist, und mit einem zweiten Ende, das bewegbar ist, sind in zahlreichen Ausführungsformen bekannt. Die klassische Leitungsführungseinheit, die auch als Energieführungskette bezeichnet wird, besteht aus einzelnen gelenkig miteinander verbundenen Kettengliedern, die einen Führungskanal bilden. In diesen Führungskanal sind Leitungen, Kabel od. dgl. angeordnet.

Durch die WO 98/40645 ist eine Leitungsführungseinheit bekannt, die aus einstückigen Schutzelementen aus Kunststoff besteht. Das Schutzelement ist einteilig gespritzt oder gegossen und weist untereinander durch verbiegbare Brücken verbundene Teile auf. Das Schutzelement weist ein Bodensegment mit einer Oberseite und einer Unterseite und mindestens ein Wandsegment auf, das durch Biegen und/oder Falten in Richtung der Oberseite des Bodensegmentes durch mechanisches Schließen eines Schließmechanismusses zu einem geschlossenen Kanalabschnitt geformt werden kann, wobei das Schutzelement vorzugsweise mit anderen gleichartigen Schutzelementen so verbunden oder verbindbar ist, dass die Kanalabschnitte in eine Längsrichtung einen Kanal für Leitungen bilden.

Eine weitere Ausführungsform einer Leitungsführungseinheit ist durch die EP 0 789 167 A1 bekannt. Auch diese Leitungsführungseinheit dient zur aktiven Führung von Leitungen, Kabeln od. dgl. mit einem ersten Ende, das ortsfest angeordnet ist, und mit einem zweiten Ende, das bewegbar ist. Die Leitungsführungseinheit weist einen Kanal auf, der durch Segmente gebildet ist. Die Segmente sind mit einem Tragband verbunden. Während des Betriebes der Leitungsführungseinheit bildet diese und somit auch das Tragband einen Untertrum und einen Obertrum sowie einen zwischen dem Untertrum und dem Obertrum gelegenen Krümmungsbereich, wie er in der Fig. 1 der WO 98/40645 bzw. der Fig. 13 der EP 0 789 167 A1 dargestellt ist.

Der Durchmesser des Krümmungsbereiches bestimmt auch den notwendigen Raumbedarf zum Einbau der Leitungsführungseinheit. Auch bei Leitungsführungsanordnungen, die eine relativ geringe Bauhöhe aufweisen, kann im Hinblick auf die Biegefestigkeit des Tragbandes ein relativ großer Raumbedarf bestehen.

Auch moderne Arbeitsplätze, insbesondere in Großraumbüros der Industrie, der Verwaltung, und des Gewerbes, benötigen beispielsweise Energie- und Telekommunikationsanschlüsse in unmittelbarer Nähe eines jeden Arbeitsplatzes, insbesondere Schutzkontaktsteckdosen für elektronische Arbeitsgeräte, für Telefon und für Computer, Lichtschalter, Sicherungsautomaten, Überspannungsschutzgeräte und vielem mehr.

Bei Büromöbeln, wie Schreib- und Computertischen oder bei speziellen Möbeln für Ton- und Filmstudios, ist es bekannt, sogenannte Kabelkanäle zu verwenden, um stromführende und/oder sonstige Zuleitungen für auf den Möbeln aufgestellte oder an diesen angebrachte elektrische oder elektronische Geräte definiert zu führen und derart zu verlegen, dass die Kabel nicht frei liegen. Derartige Kabelkanäle dienen sowohl zum Schutz der Kabel, als auch zum Schutz des Bedieners der Geräte. Darüber hinaus verhindern derartige Kabelkanäle, dass ein Gerät von dem Möbelstück nicht heruntergerissen wird.

Durch die DE 199 15 035 A1 ist eine Leitungsführungseinrichtung zum Führen von wenigstens einer Leitung bekannt, wobei die Leitungsführungseinheit durch Glieder aufgebaut ist, die ein erster und ein zweiter Führungsabschnitt benachbarter Glieder miteinander verbunden sind.

Der Durchmesser des Krümmungsbereiches bestimmt auch den notwendigen Raumbedarf zum Einbau der Leitungsführungseinheit. Auch bei Leitungsführungsanordnungen, die eine relativ geringe Bauhöhe aufweisen, kann im Hinblick auf die Biegefestigkeit des Tragbandes ein relativ großer Raumbedarf bestehen.

Hiervon ausgehend liegt der vorliegenden Erfindung die Zielsetzung zugrunde, ein Tragband sowie eine Leitungsführungseinheit anzugeben, bei welchem bzw. bei welcher der Raumbedarf für den Einbau der Leitungsführungseinheit verringert wird. Desweiteren soll ein Verfahren zur Herstellung eines Tragbandes zur Verringerung des Raumbedarfs für den Einbau der Leitungsführungseinheit beschrieben werden.

Diese Aufgabe wird erfindungsgemäß durch ein Tragband mit den Merkmalen des Anspruchs 1, durch eine Leitungsführungseinheit mit den Merkmalen des Anspruchs 10 bzw. durch eine Verfahren mit den Merkmalen des Anspruchs 23 gelöst. Vorteilhafte Weiterbildungen und Ausgestaltungen, die jeweils einzeln angewandt oder beliebig miteinander kombiniert werden können, sind Gegenstand der jeweils abhängigen Ansprüche.

Das erfindungsgemäße Tragband für eine Leitungsführungseinheit zur Führung von Leitungen, Kabeln od. dgl. zeichnet sich dadurch aus, dass das Tragband durch Tragabschnitte und Gelenkabschnitte gebildet ist. Die Tragabschnitte und die Gelenkabschnitte sind abwechselnd angeordnet. Diese sind aus Werkstoffen mit unterschiedlichen Eigenschaften im Mehrkomponentenverfahren gebildet.

Durch diese erfindungsgemäße Ausgestaltung des Tragbandes wird erreicht, dass der Krümmungsbereich, der z. B. bei der Bildung eines Obertrums und eines Untertrums entsteht, relativ gering ist, da lediglich der Gelenkabschnitt mit seiner Biegefestigkeit diesen beeinflusst. Hierbei kann der Tragabschnitt als ein im wesentlichen starrer Körper ausgebildet sein, während der zwei Tragabschnitte verbindende Gelenkabschnitt aus einem Werkstoff hergestellt ist, der sehr biegsam ist. Durch geeignete Auswahl des Werkstoffes, aus dem der Gelenkabschnitt gebildet ist, kann die Biegsamkeit des Gelenkabschnittes variiert bzw. an die Erfordernisse des Krümmungsbereichs der Leitungen oder Schläuche angepasst werden.

Das Tragband mit seinen Tragabschnitten und Gelenkabschnitten ist vorzugsweise nach dem Mehrkomponenten-Spritzverfahren hergestellt. Alternativ können die Tragabschnitte und die Gelenkabschnitte nach dem Mehrkomponenten-Extrusionsverfahren hergestellt sein. Kommt das Mehrkomponenten-Extrusionsverfahren zum Einsatz, so kann da Tragband als solches extrudiert werden. Alternativ kann zunächst ein plattenförmiger Rohling mit Trag- und Gelenkabschnitten ausgebildet werden, der anschließend quer zur Extrusionsrichtung zerteilt wird. Diese Herstellungsweise des Tragbandes hat auch den Vorteil, dass Tragbänder mit unterschiedlicher Breite hergestellt werden können.

Zur Verringerung des Eigengewichts des Tragbandes und ggf. zur Erhöhung der Festigkeit wird vorgeschlagen, dass wenigstens die Tragabschnitte als Profile, vorzugsweise als Hohlprofile, ausgebildet sind. Insbesondere die Ausbildung der Tragabschnitte als Hohlprofile hat auch den Vorteil, dass eine relativ hohe Materialersparnis eintritt, was mit einer ökonomischeren Herstellung des Tragbandes einhergeht. Des weiteren wird mit der Ausgestaltung als Hohlprofil des Tragbandes eine erhöhte Steifigkeit des Tragbandes erzielt.

Das Tragband einer Leitungsführungseinheit zur Führung von Leitungen, Kabeln od. dgl. umfasst vorzugsweise wenigstens zwei miteinander verbundene Tragbandabschnitte. Die Verbindung mehrerer Abschnitte ermöglicht die Ausbildung beliebig langer Tragbänder. Auch kann durch eine derartige Verbindung die Länge des Tragbandes nach einem Baukastenprinzip für die jeweilige Anwendung genau angepasst werden. Es besteht auch die Möglichkeit, mehrere Abschnitte nebeneinander anzuordnen und diese zu verbinden, so dass auch eine Erhöhung der Variationsmöglichkeit der Breite des Tragbandes und somit der Leitungsführungseinheit erzielt wird. Darüber hinaus kann auch ein Tragbandabschnitt mit wenigstens zwei weiteren Tragbandabschnitten verbunden werden. Hiermit wird eine Aufteilung bzw. eine Zusammenführung der in einer Leitungsführungseinheit geführten Leitungen, Kabeln od. dgl. auf wenigstens zwei Leitungsführungseinheiten ermöglicht.

Die Tragbandabschnitte sind vorzugsweise kraft- und/oder formschlüssig miteinander verbunden. Insbesondere wird vorgeschlagen, dass die Abschnitte lösbar miteinander verbunden sind. Durch die Lösbarkeit wird eine besondere Flexibilität beim Einsatz der Tragbänder erreicht. Insbesondere können lange Tragbänder bei Bedarf ohne Schwierigkeiten wieder verkürzt werden. Alternativ können die Tragbandabschnitte unlösbar miteinander verbunden sein. Hierbei besteht die Möglichkeit, die Tragbandabschnitte durch geeignete Verbindungsmittel miteinander zu verbinden. Verbindungsmittel können beispielsweise Halteclips sein. Statt der Verwendung von Verbindungsmitteln zur Ausbildung einer unlösbaren Verbindung der Tragabschnitte, werden die Tragabschnitte gemäß einem weiteren Vorschlag miteinander verklebt oder verschweißt.

In einer vorteilhaften Ausgestaltung der Erfindung sind die Tragabschnitte trapezförmig und/oder rautenförmig. Mit Hilfe von trapezförmigen und/oder rautenförmigen Tragabschnitten kann die von dem Tragbahn eingenommene Bahn im dreidimensionalen Raum beeinflusst und maßgeschneidert werden. Insbesondere beschreibt das Tragband durch Vorgabe gleichmäßiger Trapeze eine Helix, wobei die Steigung der Helix durch den Winkel der Tragabschnitte zueinander vorgeben ist. Mit einem derartigen Tragband können beispielsweise Leitungen eines Roboterarms, der eine gleitende Rotationsbewegungen, d.h. eine Kombination aus einer Translationsbewegung und einer Rotationsbewegung, durchführt, sicher geführt werden. Alternativ sind die Gelenkabschnitte trapezförmig und/oder rautenförmig ausgebildet. Durch eine trapezförmige und/oder rautenförmige Ausbildung der Gelenkabschnitte werden die elastischen Eigenschaften des Tragbandes beeinflusst. Insbesondere können hiermit Kippbewegungen um eine Achse längs zum Tragband zugelassen werden.

Die erfindungsgemäße Leitungsführungseinheit zur Führung von Leitungen, Kabeln od. dgl. weist einen Kanal auf, der wenigstens teilweise durch mindestens ein Tragband gebildet ist. Das Tragband weist sich abwechselnde Tragabschnitte und Gelenkabschnitte auf. Die Tragabschnitte und die Gelenkabschnitte sind aus Werkstoffen mit sich unterscheidenden Eigenschaften im Mehrkomponentenverfahren gebildet. Durch diese erfindungsgemäße Ausgestaltung der Leistungsführungseinheit wird die Möglichkeit geschaffen, eine hochflexible Leitungsführungseinheit bereit zu stellen, die an den Verwendungszweck sehr gut angepasst ist. Die Leitungsführungseinheit weist vorzugsweise ein Tragband auf, das nach einem der Ansprüche 1 bis 9 ausgebildet ist. Der Kanal ist durch Segmente gebildet, die mit mindestens einem Tragband verbunden sind. Hierdurch wird der Raumbedarf für den Einbau der Leitungsfährungseinheit verringert.

Es besteht die Möglichkeit, dass die Segmente mit einem jeden Tragabschnitt verbunden sind. Dies ist nicht zwingend notwendig. So können ausgewählte Tragabschnitte mit Segmenten verbunden sein. Auch können mehrere Tragabschnitte mit nur einem Segment verbunden sein. Hiermit wird die Steifigkeit der Leitungsführungseinheit beeinflusst, welches insbesondere dann wichtig ist, wenn eine lange Leitungsführungseinheit zusammengeschoben, gestaucht, gestapelt oder aufgerollt werden soll und auf Druck belastet wird. Durch die Versteifung mehrerer Tragabschnitte kann das Verhalten der Leitungsführungseinheit bei Druckbelastung gezielt vorgegeben werden. Insbesondere kann zur Erzielung einer besonders dichten Packung einer zusammengelegten Leitungsführungseinheit damit kontrolliert vorgegeben werden, in wie viele Lagen sich eine Leitungsführungseinheit legt, wenn sie zusammen geschoben wird.

Für eine leichte Anpassung der erfindungsgemäßen Leitungsführungseinheit an unterschiedliche Verwendungsfälle wird vorgeschlagen, dass die Segmente kraft- und/oder formschlüssig mit den Tragabschnitten verbunden sind. Insbesondere wird vorgeschlagen, dass die Segmente lösbar mit den Tragabschnitten verbunden sind. Statt einer lösbaren Verbindung einzelner Segmente mit den Tragabschnitten besteht auch die Möglichkeit, die Segmente unlösbar mit den Tragabschnitten zu verbinden. Dies kann beispielsweise durch Kleben oder Schweißen erfolgen.

Insbesondere wird vorgeschlagen, dass zur lösbaren Verbindung der Segmente mit den Tragabschnitten diese Verbindungsmittel aufweisen. Die Verbindungsmittel können als Clipanordnungen oder Steckverbindungen ausgestaltet sein.

Vorzugsweise wird eine Leitungsführungseinheit vorgeschlagen, bei der die Segmente Seitenwände aufweisen und jeder Tragabschnitt und/oder wenigstens eine Seitenwand als Verbindungsmittel eine Ausnehmung und/oder einen ersten Vorsprung aufweist, die so ausgebildet sind, dass der erste Vorsprung in die Ausnehmung eingreift. Hierdurch wird die Möglichkeit einer einfachen und kompakten Bauweise der erfindungsgemäßen Leitungsführungseinheit erreicht. Insbesondere kann durch diese Maßnahme die Leitungsführungseinheit nach einem Baukastenprinzip für den jeweiligen konkreten Anwendungsfall angepasst werden.

Gemäß einer noch weiteren vorteilhaften Ausgestaltung der Leitungsführungseinheit wird vorgeschlagen, dass wenigstens ein Tragabschnitt einen quer zur Längsrichtung des Tragbandes verlaufende Durchführung aufweist, durch die sich wenigstens ein Verbindungselement hindurch erstreckt, das die Seitenwände eines Segmentes verbindet. Hierdurch wird eine baukastenartige Ausbildung der Leitungsführungseinheit bereitgestellt, die eine hohe Flexibilität hinsichtlich unterschiedlicher Anwendungsfälle aufweist, wobei die Anzahl der zum Aufbau der Leitungsführungseinheit notwendigen Bauteile relativ gering ist.

Zur Vereinfachung der Montage der Leitungsführungseinheit wird gemäß einer noch weiteren vorteilhaften Ausgestaltung der erfindungsgemäßen Leitungsführungseinheit vorgeschlagen, dass wenigstens ein Segment Seitenwände aufweist, die durch einen ersten Quersteg verbunden sind. Die Seitenwände weisen jeweils einen zweiten Vorsprung auf, die einander zugewandt sind, wobei der Tragabschnitt zwischen dem ersten Quersteg und den zweiten Vorsprüngen angeordnet ist. Durch ein Zusammendrücken der den ersten bzw. zweiten Vorsprüngen gegenüberliegenden Endbereichen der Seitenwände wird der Abstand zwischen den Vorsprüngen vergrößert, so dass das Band in den zwischen dem ersten Quersteg und den Vorsprüngen freien Raum eingeführt werden kann, ohne dass es hierzu einer komplizierten Handhabung bedarf.

Vorteilhafterweise weist wenigstens ein Segment Seitenwände auf, die durch einen zweiten Quersteg verbunden sind. Der zweite Quersteg trägt zur Steifigkeit der Leitungsführungseinheit bei. Auch kann durch ihn eine Abdichtung des Innenraums der Leitungsführungseinheit bewirkt werden, indem der zweite Quersteg das Segment im wesentlichen abdeckt. Alternativ weist wenigstens ein Segment Seitenwände auf, wobei mindestens eine Seitenwand einen Teilsteg aufweist, welcher der gegenüberliegenden Seitenwand zugewandt ist. Mit Hilfe des Teilsteges können Leitungen, der Kabel oder dergleichen auf einfache Weise in die Leitungsführungseinheit eingelegt aus ihr herausgenommen werden. Mit Hilfe eines Teilsteges ist ebenso möglich durch ein Zusammendrücken der den ersten bzw. zweiten Vorsprüngen gegenüberliegenden Endbereichen der Seitenwände den Abstand zwischen den Vorsprüngen zu vergrößern, um das Tragband in den zwischen dem ersten Quersteg und den Vorsprüngen freien Raum einzuführen.

Vorteilhafterweise weisen wenigstens zwei benachbarte Segmente jeweils eine Seitenwand auf, wobei wenigsten die eine Seitenwand einen Überlappungsbereich aufweist, der die andere Seitenwand überlappt. Der Überlappungsbereich kann zwei Funktionen haben: zum einen bewirkt er eine Abdichtung zwischen den Segmenten, so dass die Leitungen, die Kabel oder dergleichen weniger Einflüssen der Umgebung ausgesetzt sind. Zum anderen bewirkt der Überlappungsbereich eine verbesserte Stabilität insbesondere eine höhere Steifigkeit der Leitungsführungseinheit gegenüber einer unerwünschten Verdrehung oder Verkippung der Segmente zueinander.

Bevorzugt ist der Überlappungsbereich im wesentlichen kreissegmentförmig ausgebildet. Hierbei ist vorzugsweise das Kreissegment nach dem Kippwinkel der Tragabschnitte zu bemessen. Durch einen kreissegmentförmig ausgestalteten Überlappungsbereich wird eine hohe Steifigkeit bzw. eine gute Abdichtung der Leitungsführungseinheit bei wenig Materialverbrauch erzielt und das Gewicht der Leitungsführungseinheit verringert.

In einer besonderen Ausgestaltung sind die Segmente mit zwei Tragbändern verbunden. Hierbei werden die Tragbänder im wesentlichen parallel geführt. Durch die parallele Führung der Tragbänder können vergleichsweise breite Leitungsführungseinheiten mit einer nur geringen Bauhöhe gebildet werden. Insbesondere kann hiermit Material gespart werden. Auch kann hiermit die Breite der Leitungsführungseinheit für den jeweiligen Anwendungsfall angepasst werden.

Das erfindungsgemäße Tragband für eine Leitungsfiihrungseinheit sowie die erfindungsgemäße Leitungsführungseinheit können sowohl zur passiven als auch zur aktiven Führung von Leitungen, Kabeln od. dgl. verwendet werden. Bei einer aktiven Führung kann das Tragband bzw. die Leitungsführmgseinheit mit entsprechenden Vorrichtungen oder Maschinenteilen verbunden sein. Hierzu weist die Leitungsführungseinheit ein erstes Ende auf, das fixierbar ist oder ortsfest angeordnet ist und ein zweites Ende, das mit der bewegten Einrichtung verbunden ist. Bei einer passiven Führung sind die Enden der Leitungsführungseinheit ortsfest angeordnet.

Das erfindungsgemäße Verfahren zur Herstellung eines Tragbandes, insbesondere eines erfindungsgemäßen Tragbandes, umfasst folgende Schritte: eine Platte wird aus sich abwechselnden Tragstreifen und Gelenkstreifen gebildet, wobei die Tragstreifen und die Gelenkstreifen aus Werkstoffen mit sich unterscheidenden Eigenschaften im Mehrkomponentenverfahren gebildet werden; die Platte wird in einer Richtung quer zu den Gelenkstreifen in Tragbänder zerlegt. Mit Hilfe dieses Verfahren können auf effektive Weise eine Vielzahl von Tragbändern gleichzeitig hergestellt werden. Vorteilhafterweise werden die Tragstreifen und die Gelenkstreifen nach dem Mehrkomponenten-Spritzverfahren hergestellt. Alternativ werden die Tragstreifen und die Gelenkstreifen nach dem Mehrkomponenten-Extrusionsverfahren hergestellt.

Um Material zu sparen und die Steifigkeit der Tragbänder zu steigern sind die Tragstreifen als Profile, vorzugsweise als Hohlprofile, ausgebildet.

Weitere Einzelheiten und Vorteile des erfindungsgemäßen Tragbandes sowie der erfindungsgemäßen Leitungsführungseinheit werden im folgenden anhand der in der Zeichnung dargestellten Ausführungsbeispiele erläutert, ohne dass der Gegenstand der Erfindung durch diese Ausführungsbeispiele beschränkt wird.

Es zeigen schematisch:
- Fig. 1: Eine erfindungsgemäße Leitungsführungseinheit in der perspektivischen Schrägansicht,
- Fig. 2: ein Segment der erfindungsgemäßen Leitungsführungseinheit nach Fig. 1 in der perspektivischen Schrägansicht,
- Fig. 3: eine alternative Ausführungsform des Segmentes nach Fig. 2 in der Frontansicht,
- Fig. 4: das Segment nach Fig. 2 in der Seitenansicht,
- Fig. 5: eine alternative Ausführungsform eines Segmentes für einer weiteren erfindungsgemäße Leitungsführungseinheit in perspektivischer Schrägansicht,
- Fig. 6: ein Abschnitt eines erfindungsgemäßen Tragbandes im Längschnitt,
- Fig. 7: zwei miteinander verbundene Abschnitte nach Fig. 6,
- Fig. 8: eine erfindungsgemäße Energieführungseinheit mit Segmenten nach Fig. 5,
- Fig. 9: ein Segment nach Fig. 2 in der Draufsicht,
- Fig. 10: eine alternative Ausführungsform einer Seitenwand nach Fig. 4 in der Seitenansicht,
- Fig. 11: ein weiteres erfindungsgemäßes Tragband in perspektivischer Schrägansicht,
- Fig. 12: ein alternatives erfindungsgemäßes Tragband in der Draufsicht, und
- Fig. 13: eine Platte zur Herstellung eines erfindungsgemäßen Tragbandes in der Draufsicht.

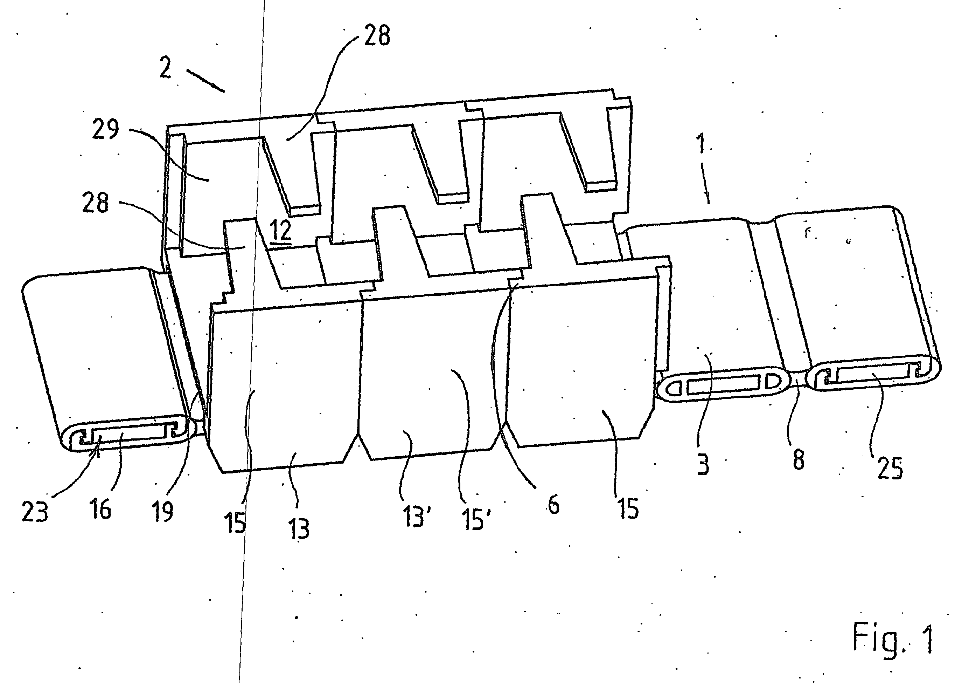

Figur 1 zeigt eine erfindungsgemäße Leitungsfübrungseinheit 2 mit einem erfindungsgemäßen Tragband 1 in perspektivischer Schrägansicht, wobei das Tragband 1 Tragabschnitte 3 und Gelenkabschnitte 8 umfasst, die miteinander mit Hilfe einer Zwei-Komponenten-Spritztechnik miteinander verbunden sind. An dem Tragband 1 sind Segmente 13, 13' befestigt, die Seitenwände 15, 15' aufweisen, wodurch ein Kanal 12 geschaffen wird, der Leitungen oder Kabel oder dergleichen (nicht abgebildet) aufnehmen kann. Jede Seitenwand 15 liegt einer weiteren Seitenwand 29 gegenüber. Die Seitenwände 15, 15' weisen jeweils einen Teilsteg 28 auf, welcher sich in Richtung auf die gegenüberliegende Seitenwand 29 erstreckt. Mit Hilfe der Teilstege 28 ist ein Einbringen von Leitungen oder Kabeln in den Kanal 12 auf einfache Weise möglich.

Die Tragabschnitte 3 sind mit einem Profil 23 ausgebildet, welches das Gewicht des Tragbandes 1 reduziert und die Steifigkeit des Tragabschnitts 3 erhöht. Das Profil 23 umfasst eine Ausnehmung 16, an dem die Segmente 13, 13' bzw. die Seitenwände 15, 15', 29 befestigt werden können. Die Seitenwände 15, 15', 29 weisen einen Überlappungsbereich 6 auf, mit dem bei Krümmung der Leitungsführungseinheit 2 der Kanal 12 an den Seitenwänden 15, 15', 29 abgedichtet wird. Der Überlappungsbereich 6 bewirkt darüber hinaus eine zusätzliche Stabilität der Leitungsführungseinheit 2 durch Aufnahme von seitlichen Kräften, die durch die Seitenwände 15, 15', 29 aufgebracht werden. Die Segmente 13, 13' sind mit den Überlappungsabschnitten 6 miteinander rotationsfest um die Längsachse des Tragbandes 1 verbunden. Eine derartige Leitungsführungseinheit 2 ist auf einfache Weise preiswert herstellbar und zeichnet sich durch eine hohe Vielfalt und Flexibilität in der Anwendung aus.

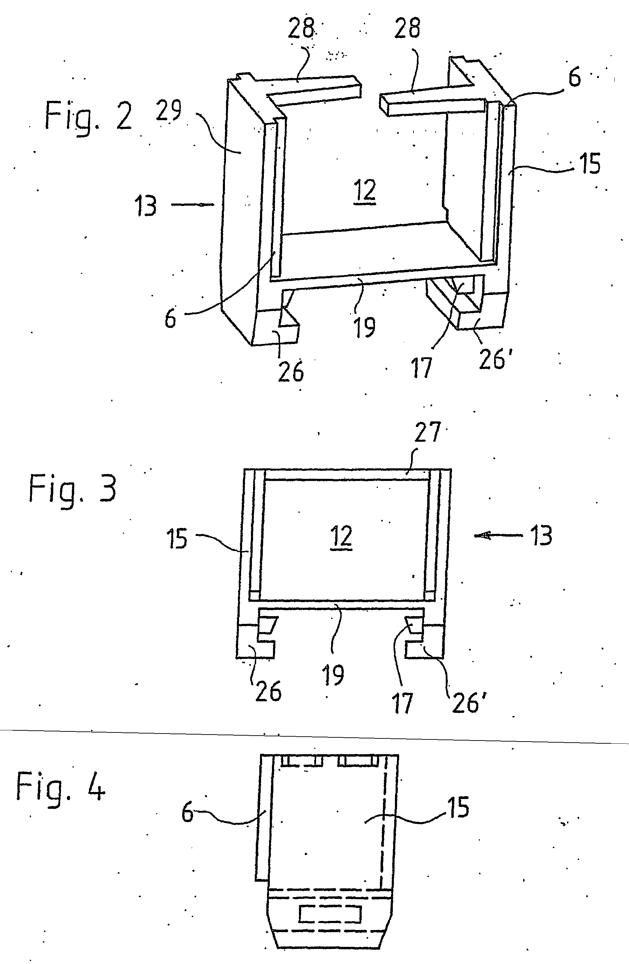

Figur 2 zeigt das Segment 13 nach Figur 1 in der perspektivischen Schrägansicht mit der Seitenwand 15 und der gegenüberliegenden Seitenwand 29, die durch einen ersten Quersteg 19 miteinander verbunden sind und den Kanal 12 bilden. Der Kanal 12 ist weiterhin durch den Teilsteg 28 begrenzt. Die Seitenwände 15, 29 weisen den Überlappungsbereich 6 auf, mit dem das Segment 13 an sein benachbartes Segment 13' verbunden werden kann. Unterhalb des ersten Querstegs 19 befindet sich ein erster Vorsprung 17, der in die Ausnehmung 16 des Tragabschnitts 3 des Tragbands 1 greifen kann. Ebenso unterhalb des ersten Querstegs 19 weisen die Seitenwände 15, 29 jeweils einen zweiten Vorsprung 26, 26' auf, die einander zugewandt sind, wobei der Tragabschnitt 3 zwischen dem ersten Quersteg 19 und den zweiten Vorsprüngen 26, 26' anordenbar sind.

Figur 3 zeigt das Segment 13 nach Figur 2 in der Frontansicht, wobei der Teilsteg 28 als zweiter Quersteg 27 ausgebildet ist, so dass der Kanal 12 vollständig geschlossen ist. Zu erkennen ist auch, dass das Tragband 1 zwischen den zweiten Vorsprüngen 26, 26' und dem ersten Quersteg 19 fixiert werden kann. Zu einer Fixierung trägt darüber hinaus der erste Vorsprung 17 bei, der in die Ausnehmung 16 des Tragbandes 1 greift.

Figur 4 zeigt das Segment 13 nach Fig. 2 in der Seitenansicht. Zu erkennen ist die Seitenwand 15 mit dem Überlappungsbereich 6 zur Verbindung der Seitenwand 15 mit einer benachbarten Seitenwand.

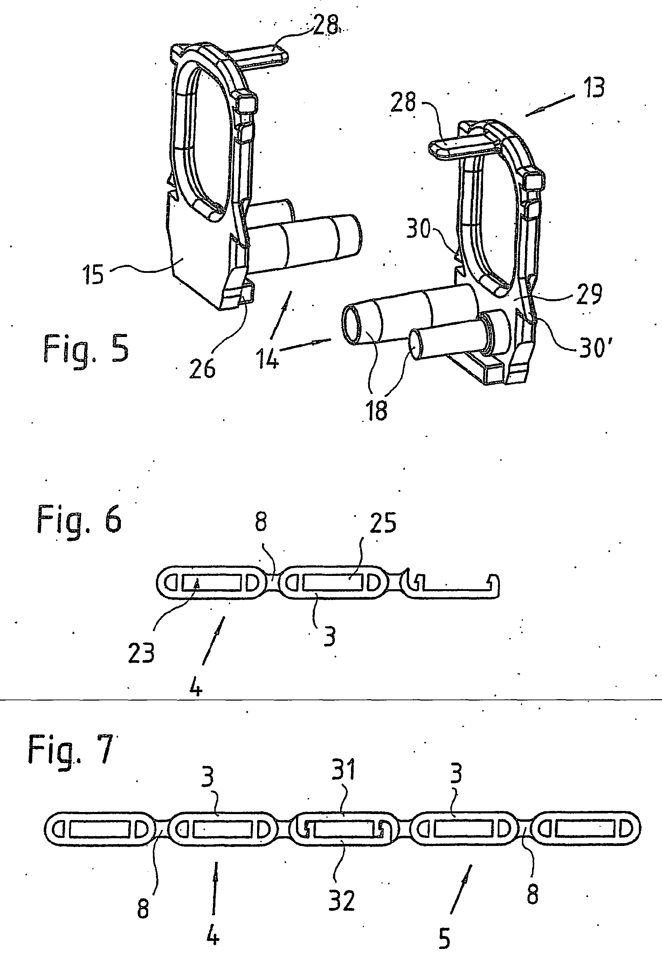

Figur 5 zeigt ein zusammensetzbares Segment in perspektivischer Schrägansicht mit Verbindungsmitteln 15, die durch Verbindungselemente 18 gebildet werden, mit denen die Seitenwände 15, 29 miteinander verbunden werden können. Das Tragband 1 wird an seinem Tragabschnitt 13 zwischen dem Verbindungselement 18 und dem zweiten Vorsprung 26 eingespannt. Ein dritter Vorsprung 30, 30' trägt weiterhin zu Stabilisierung der Leitungsführungseinheit 2 bei, in dem ein dritter Vorsprung 30 eines Segmentes 13 hinter den dritten Vorsprung 30' eines benachbarten Segmentes 13' greift.

Die Figur 6 zeigt einen ersten Abschnitt 4 eines erfindungsgemäßen Tragbandes 1 im Längsschnitt. Die Tragabschnitte 3 sind durch Gelenkabschnitte 8 miteinander verbunden, wobei die Tragabschnitte 3 als Profil 23 ausgebildet sind.

Figur 7 zeigt zwei miteinander verbundene Abschnitte, einen ersten Abschnitt 4 und einen zweiten Abschnitt 5, die lösbar miteinander verbindbar sind. Hiermit kann die Länge des Tragbandes 1 je nach Anwendungsfall verlängert beziehungsweise verkürzt werden. Zur lösbaren Verbindung wird ein erstes Verbindungsstück 31 und zweites Verbindungsstück 32 verwendet, die ineinander greifen und vorzugsweise miteinander verklippt werden können.

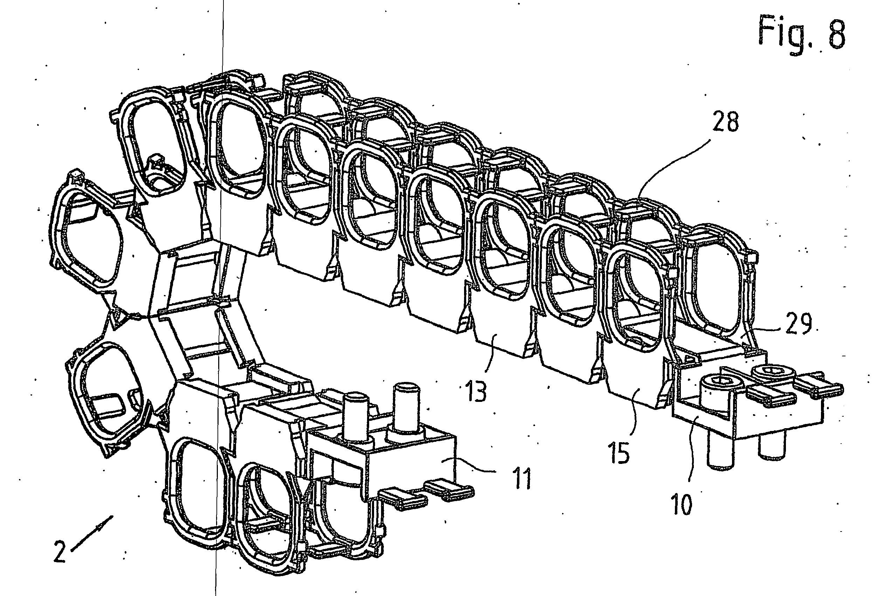

Figur 8 zeigt eine alternative Ausführungsform der erfindungsgemäßen Leitungsführungseinheit 2 mit Segmenten 13 und Seitenwänden 15, wobei ein erstes Ende 10 der Leitungsführungseinheit 2 an einem festen Ort im Raum fixierbar ist und ein zweites Ende 11 der Leitungsführungseinheit 2 an einem beweglichen Teil, beispielsweise einem Roboterarm (nicht abgebildet) befestigbar ist.

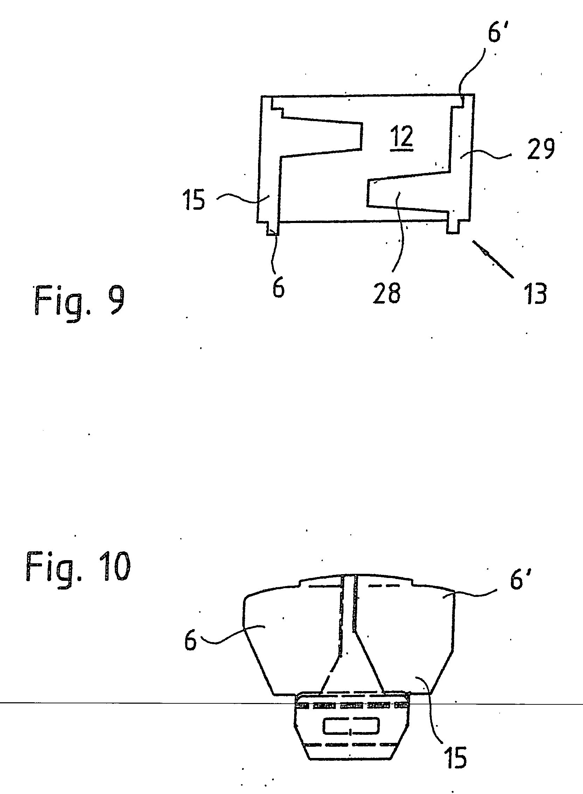

Figur 9 zeigt das Segment 13 nach Figur 2 in der Draufsicht, mit der Seitenwand 15 und der gegenüberliegenden Seitenwand 19, von denen aus sich erstreckend jeweils ein Teilsteg 28 auf die jeweilig andere Seitenwand 15, 29 zeigt. Die Seitenwände 15, 29 weisen Überlappungsbereiche 6, 6' auf zur Stabilisierung der Leitungsführungseinheit 2 gegenüber Verdrehung entlang einer Längsachse des - Tragbandes 1 beziehungsweise gegenüber Verkantung zweier benachbarter Segmente 13. Die Überlappungsbereiche 6, 6' dichten den Kanal 12 zur Seite hin ab.

Figur 10 zeigt eine Seitenwand mit einer alternativen Ausgestaltung des Überlappungsbereichs 6, 6', wobei der Überlappungsbereich 6, 6' als Kreissegment ausgestaltet ist. Dieses ist insbesondere dann vorteilhaft, wenn das Tragband 1 beziehungsweise die Leitungsführungseinheit 2 gekrümmt ist und somit die zwischen den Segmenten 13, 13' entstehenden Öffnungen abgedeckt werden müssen.

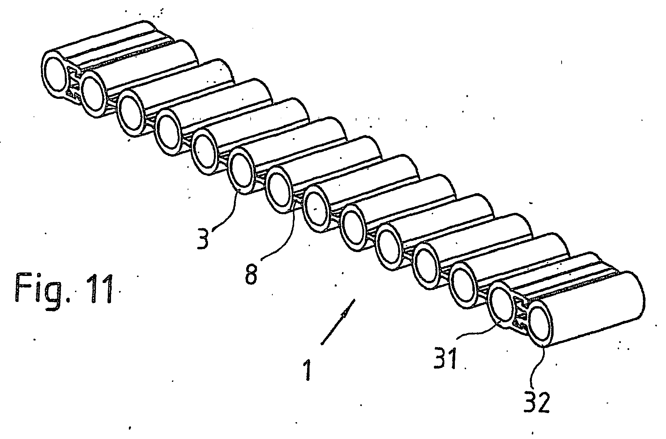

In Figur 11 ist eine weitere Ausführungsform des erfindungsgemäßen Tragbandes 1 dargestellt, wobei die Tragabschnitte 3 als Hohlrohre ausgebildet sind und die Gelenkabschnitte 8 als Stege. Das erste Verbindungsstück 31 stellt eine Aufnahme für das zweite Verbindungsstück 32 dar. Mit Hilfe der beiden Verbindungsstücke 31, 32 kann das Tragband 1 beliebig verlängert oder in seiner Länge angepasst werden. Auch kann das Tragband 1 hiermit an seinen Enden fixiert werden.

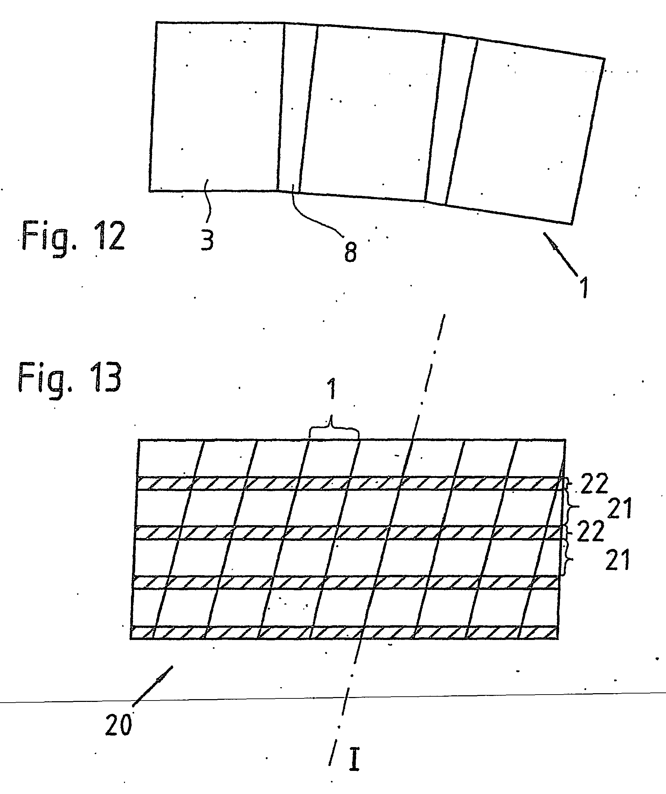

Figur 12 zeigt eine weitere Ausführungsform des erfindungsgemäßen Tragbandes 1 mit Tragabschnitten 3 und Gelenkabschnitten 8, wobei der Tragabschnitt 3 beziehungsweise der Gelenkabschnitt 8 trapezförmig beziehungsweise rautenförmig ausgebildet ist. Durch eine trapezförmige Ausgestaltung des Tragabschnitts 13 wird eine bestimmte Bahn, die das Tragband 1 im dreidimensionalen Raum einnehmen kann, vorgegeben. Bei gleichmäßigen Trapezen beispielsweise kann das Tragband 1 eine Bewegung auf einer Helix ausführen.

Figur 13 zeigt eine Platte 20, mit der eine Vielzahl von Tragbändern 1 gleichzeitig hergestellt werden können, indem eine derartige Platte 20 mit Tragstreifen 21 und Gelenkstreifen 22 in einem Zwei-Komponenten-Verfahren entweder extrudiert oder gespritzt wird und die Platte 20 in Tragbänder 1 in einer Richtung quer zu den Tragstreifen 21 beziehungsweise Gelenkstreifen 22 geschnitten wird. Dabei kann die Richtung dieses Schnittes senkrecht zu den Tragstreifen 21 beziehungsweise Gelenkstreifen 22 verlaufen, kann aber auch quer dazu liegen. Hierdurch entstehen trapezförmige Gelenkabschnitte 8 und Tragabschnitte 3.

Das erfindungsgemäße Tragband 1 einer Leitungsführungseinheit 2 zur aktiven Führung von Leitungen, Kabeln oder dergleichen ist dadurch gekennzeichnet, dass das Tragband 1 sich abwechselnde Tragabschnitte 3 und Gelenkabschnitte 8 aufweist und die Tragabschnitte 3 und die Gelenkabschnitt 8 aus Werkstoffen mit sich unterscheidenden Eigenschaften im Mehrkomponentenverfahren gebildet sind. Mit Hilfe des erfindungsgemäßen Tragbandes 1, der erfindungsgemäße Leitungsführungseinheit 2, die ein derartiges Tragband 1 umfasst, sowie des erfindungsgemäßen Verfahrens zur Herstellung des erfindungsgemäßen Tragbandes 1 kann auf einfache, robuste und preiswerte Weise eine Führung von Leitungen, Kabel oder dergleichen bewirkt werden.

Das erfindungsgemäße Tragband sowie die erfindungsgemäße Leitungsführungseinheit ist auch zur aktiven Führung von Leitungen, Kabeln oder dergleichen geeignet. Leitungsführungseinheiten zur aktiven Führung von Leitungen, Kabeln oder dgl. mit einem ersten Ende, das ortsfest angeordnet ist, und mit einem zweiten Ende, das bewegbar ist, sind in zahlreichen Ausführungsformen bekannt. Die klassische Leitungsführungseinheit, die auch als Energieführungskette bezeichnet wird, besteht aus einzelnen gelenkig miteinander verbundenen Kettengliedern, die einen Führungskanal bilden. In diesen Führungskanal sind Leitungen, Kabel od. dgl. angeordnet. Durch die WO 98/40645 ist eine Leitungsführungseinheit bekannt, die aus einstückigen Schutzelementen aus Kunststoff besteht. Das Schutzelement ist einteilig gespritzt oder gegossen und weist untereinander durch verbiegbare Brücken verbundene Teile auf. Das Schutzelement weist ein Bodensegment mit einer Oberseite und einer Unterseite und mindestens ein Wandsegment auf, das durch Biegen und/oder Falten in Richtung der Oberseite des Bodensegmentes durch mechanisches Schließen eines Schließmechanismusses zu einem geschlossenen Kanalabschnitt geformt werden kann, wobei das Schutzelement vorzugsweise mit anderen gleichartigen Schutzelementen so verbunden oder verbindbar ist, dass die Kanalabschnitte in eine Längsrichtung einen Kanal für Leitungen bilden.

Eine weitere Ausführungsform einer Leitungsführungseinheit ist durch die EP 0 789 167 A1 bekannt. Auch diese Leitungsführungseinheit dient zu aktiven Führung von Leitungen, Kabeln od. dgl. mit einem ersten Ende, das ortsfest angeordnet ist, und mit einem zweiten Ende, das bewegbar ist. Die Leitungsführungseinheit weist einen Kanal auf, der durch Segmente gebildet ist. Die Segmente sind mit einem Tragband verbunden. Während des Betriebes der Leitungsführungseinheit bildet diese und somit auch das Tragband einen Untertrum und einen Obertrum sowie einen zwischen den Untertrum und den Obertrum gelegenen Krümmungsbereich, wie er in der Fig. 1 der WO 98/40645 bzw. der Fig. 13 der EP 0 789 167 A1 dargestellt ist.

In der Fig. 14 ist eine Leitungsführungseinheit zur stationären Führung von Leitungen, Kabeln od. dgl. dargestellt. Die Leitungsführungseinheit weist ein Tragband 1 auf, welches im Wesentlichen entsprechend der Ausgestaltung des Tragbands 1 in der Figur 11 entspricht. Dies ist jedoch nicht zwingend notwendig. Es können auch andere Ausformungen und Ausgestaltungen des Tragbandes realisiert werden. Das eine Ende der Leitungsführungseinheit 2 weist ein Bodenteil 33 auf. Das Bodenteil 33 hat einen Befestigungskörper 36. Von dem Befestigungskörper 36 erstrecken sich zwei Laschen 34 weg, die form- und gegebenenfalls kraftschlüssig mit dem Tragband 1 verbunden sind. Die Laschen 34 weisen Verbindungsmittel auf, die in entsprechende Ausnehmungen des Tragbands 1 eingreifen. Das Bodenteil 33 kann mit einem Boden verbunden sein. Hierzu weist der Körper 36 Bohrungen 35 auf. Zur Durchführung von Leitungen durch das Bodenteil 33 ist eine Versorgungsöffnung 37 vorgesehen. Es können auch mehrere Versorgungsöffnungen 37 vorhanden sein, so dass eine getrennte Durchführung von Leitungen durch das Bodenteil 33 ermöglicht wird.

Der Begriff Bodenteil ist nicht darauf beschränkt, dass dieses mit einem Boden verbunden sein muss. Es besteht auch die Möglichkeit, dass das Bodenteil mit einer Edenfläche verbunden wird.

Das gegenüberliegende Ende der Leitungsführungseinheit 2 weist ein Befestigungsteil 38 auf. Das Befestigungsteil 38 ist in dem dargestellten Ausführungsbeispiel U-förmig ausgebildet. Die freien Schenkel 39 weisen nicht dargestellte Verbindungsmittel auf, mittels deren das Befestigungsteil 38 mit dem Tragband verbunden ist. Zur Festlegung des Befestigungsteils 38 sind in der Basis 40 entsprechende Öffnungen vorgesehen, durch die sich Befestigungsmittel beispielsweise Schrauben hindurch erstrecken können.

Das Befestigungsteil 38 ist derart ausgebildet, dass eine zugentlastende Festlegung der in der Leitungsführungseinheit geführten Leitungen möglich ist.

Beidseits des Tragbandes 1 ist jeweils ein Kanal 12 vorgesehen. Der Kanal 12 ist durch das Tragband 1 sowie durch Segmente begrenzt. Die Segmente 13 weisen Seitenwände 15 auf, die sich zu beiden Seiten des Tragbandes hin erstrecken. Die Seitenwände 15 sind in dem dargestellten Ausführungseinheit gekrümmt ausgebildet. Die sich gegenüberliegenden Stirnflächen der Seitenwände 15 bilden einen Einführspalt 42, durch den Leitungen in einen Kanal eingebracht oder aus diesen entfernt werden können. Die Seitenwände 15 sind dabei vorzugsweise so ausgebildet, dass sie eine gewisse Elastizität aufweisen, wodurch das Einbringen bzw. Entnehmen von Leitungen erleichtert wird.

Die Segmente 13 weisen Verbindungsmittel auf. Vorzugsweise handelt es sich bei den Verbindungsmitteln solche, wie sie in der Figur 5 dargestellt sind.

Eine weitere Ausführungsform einer Leitungsführungseinheit ist durch die EP 0 789 167 A1 bekannt. Auch diese Leitungsführungseinheit dient zur aktiven Führung von Leitungen, Kabeln od. dgl. mit einem ersten Ende, das ortsfest angeordnet ist, und mit einem zweiten Ende, das bewegbar ist. Die Leitungsführungseinheit weist einen Kanal auf, der durch Segmente gebildet ist. Die Segmente sind mit einem Tragband verbunden. Während des Betriebes der Leitungsführungseinheit bildet diese und somit auch das Tragband einen Untertrum und einen Obertrum sowie einen zwischen dem Unterum und dem Obertrum gelegenen Krümmungsbereich, wie er in der Fg. 1 der WO 98/40645 bzw. der Fig. 13 der EP 0 789167 A1 dargestellt ist.

### Bezugszeichenliste

- 1: Tragband
- 2: Leitungsführungseinheit
- 3: Tragabschnitte
- 4: erster Abschnitt
- 5: zweiter Abschnitt
- 6, 6': Überlappungsbereich
- 8: Gelenkabschnitt
- 10: erstes Ende
- 11: zweites Ende
- 12: Kanal
- 13, 13': Segmente
- 14: Verbindungsmittel
- 15, 15': Seitenwand
- 16: Ausnehmung
- 17: erster Vorsprung
- 18: Verbindungselement
- 19: erster Quersteg
- 20: Platte
- 21 .: Tragstreifen
- 22: Gelenkstreifen
- 23: Profil
- 25: Durchführung
- 26, 26': zweiter Vorsprung
- 27: zweiter Quersteg
- 28: Teilsteg
- 29: gegenüberliegende Seitenwand
- 30,30': dritter Vorsprung
- 31: erste Verbindungsstück
- 32: zweites Verbindungsstück
- 33: Bodenteil
- 34: Lasche
- 35: Bohrung
- 36: Körper
- 37: Versorgungsöffnung
- 38: Befestigungsteil
- 39: Schenkel
- 40: Basis
- 42: Einführspalt

- I: Richtung

## Patentansprüche

1. Tragband (1) für eine Leitungsfühmngseinheit (2) zur Führung von Leitungen, Kabeln **dadurch gekennzeichnet, dass** das Tragband (1) sich mit Tragabschnitten (3) abwechselnde Gelenkabschnitte (8) aufweist, und die Tragabschnitte (3) und die Gelenkabschnitte (8) aus Werkstoffen mit sich unterscheidenden Eigenschaften im Mehrkomponentenverfahren gebildet sind.

2. Tragband (1) nach Anspruch 1, **dadurch gekennzeichnet, dass** die Tragabschnitte (3) und die Gelenkabschnitte (8) nach dem Mehrkomponenten-Spritzverfahren hergestellt sind.

3. Tragband (1) nach Anspruch 1, **dadurch gekennzeichnet, dass** die Tragabschnitte (3) und die Gelenkabschnitte (8) nach dem Mehrkomponenten-Extrusionsverfahren hergestellt sind.

4. Tragband (1) nach Anspruch 1, 2 oder 3, **dadurch gekennzeichnet, dass** die Tragabschnitte (3) als Profile (23), vorzugsweise als Hohlprofile ausgebildet sind.

5. Tragband (1) nach einem der Ansprüche 1 bis 4, **dadurch gekennzeichnet, dass** das Tragband (1) durch wenigstens zwei miteinander verbundene Abschnitte (4, 5) gebildet ist.

6. Tragband (1) nach Anspruch 5, **dadurch gekennzeichnet, dass** die Abschnitte (4, 5) kraft- und/oder formschlüssig miteinander verbunden sind.

7. Tragband (1) nach Anspruch 5 oder 6, **dadurch gekennzeichnet, dass** die Abschnitte (4, 5) lösbar miteinander verbunden sind.

8. Tragband (1) nach einem der vorherigen Ansprüche, **dadurch gekennzeichnet, dass** die Tragabschnitte (3) trapezförmig und/oder rautenförmig sind.

9. Tragband (1) nach einem der vorherigen Ansprüche, **dadurch gekennzeichnet, dass** die Gelenkabschnitte (8) trapezförmig und/oder rautenförmig sind.

10. Leitungsfiihrungseinheit (2) zur Führung von Leitungen, Kabeln oder dergleichen, wobei die Leitungsführungseinheit (2) einen Kanal (12) aufweist, der wenigstens teilweise durch mindestens ein Tragband (1) gebildet ist, **dadurch gekennzeichnet, dass** das Tragband (1) sich abwechselnde Tragabschnitte (3) und Gelenkabschnitte (8) aufweist, und die Tragabschnitte (3) und die Gelenkabschnitte (8) aus Werkstoffen mit sich unterscheidenden Eigenschaften im Mehrkomponentenverfahren gebildet sind, wobei der Kanal (12) durch Segmente (13) gebildet ist, die mit mindestens einem Tragband (1) verbunden sind.

11. Leitungsführungseinheit nach Anspruch 10, **dadurch gekennzeichnet, dass** das Tragband (1) nach einem der Ansprüche 1 bis 9 ausgebildet ist.

12. Leitungsführungseinheit (2) nach Anspruch 10 oder 11, **dadurch gekennzeichnet, dass** die Segmente (13) kraft- und/oder formschlüssig mit den Tragabschnitten (3) verbunden sind.

13. Leitungsführungseinheit (2) nach Anspruch 10, 11 oder 12, **dadurch gekennzeichnet, dass** die Segmente (13) lösbar mit den Tragabschnitten (3) verbunden sind.

14. Leitungsführungseinheit (2) nach einem der Ansprüche 10 bis 13, **dadurch gekennzeichnet, dass** Segmente (13) und die Tragabschnitte (3) Verbindungsmittel (14) aufweisen.

15. Leitungsführungseinheit (2) nach Anspruch 14, **dadurch gekennzeichnet, dass** die Segmente (13) Seitenwände (15) aufweisen und jeder Tragabschnitt (3) und/oder wenigstens eine Seitenwand (15) als Verbindungsmittel (14) eine Ausnehmung (16) und/oder einen ersten Vorsprung (17) aufweist, die so ausgebildet sind, dass der erste Vorsprung (17) in die Ausnehmung (16) eingreift.

16. Leitungsführungseinheit (2) nach Anspruch 15, **dadurch gekennzeichnet, dass** wenigstens ein Tragabschnitt (3) einen quer zur Längsrichtung des Tragbandes (1) verlaufende Durchführung (25) aufweist, durch die sich wenigstens ein Verbindungselement (18) hindurch erstreckt, welches die Seitenwände (15) eines Segmentes (13) verbindet.

17. Leitungsführungseinheit (2) nach einem der Ansprüche 10 bis 16, **dadurch gekennzeichnet, dass** wenigstens ein Segment (13) Seitenwände (15) aufweist, die durch einen ersten Quersteg (19) verbunden sind, dass die Seitenwände (15) jeweils einen zweiten Vorsprung (26, 26') aufweisen, die einander zugewandt sind, wobei der Tragabschnitt (3) zwischen dem ersten Quersteg (19) und den zweiten Vorsprüngen (26, 26') angeordnet ist.

18. Leitungsführungseinheit (2) nach einem der Ansprüche 10 bis 17, **dadurch gekennzeichnet, dass** wenigstens ein Segment (13) Seitenwände (15) aufweist, die durch einen zweiten Quersteg (27) verbunden sind.

19. Leitungsführungseinheit (2) nach einem der Ansprüche 10 bis 18, **dadurch gekennzeichnet, dass** wenigstens ein Segment (13) Seitenwände (15, 29) aufweist, wobei mindestens eine Seitenwand (15) einen Teilsteg (28) aufweist, welcher der gegenüberliegenden Seitenwand (29) zugewandt ist.

20. Leitungsführungseinheit (2) nach einem der Ansprüche 10 bis 19, **dadurch gekennzeichnet, dass** wenigstens zwei benachbarte Segmente (13, 13') jeweils eine Seitenwand (15, 15') aufweisen, wobei wenigsten die eine Seitenwand (15) einen Überlappungsbereich (6) aufweist, der die andere Seitenwand (15') überlappt.

21. Leitungsführungseinheit (2) nach Anspruch 20, **dadurch gekennzeichnet, dass** der Überlappungsbereich (6) im wesentlichen kreissegmentförmig ausgebildet ist.

22. Leitungsführungseinheit (2) nach Anspruche 10 bis 21, **dadurch gekennzeichnet, dass** die Segmente (13) mit zwei Tragbändern (1) verbunden sind.

23. Verfahren zur Herstellung eines Tragbandes (1), insbesondere eines Tragbandes (1) nach einem der Ansprüche 1 bis 11, umfassend folgende Schritte:
- eine Platte (20) wird aus sich abwechselnden Tragstreifen (21) und Gelenkstreifen (22) gebildet, wobei die Tragstreifen (21) und die Gelenkstreifen (22) aus Werkstoffen mit sich unterscheidenden Eigenschaften im Mehrkomponentenverfahren gebildet werden;
- die Platte (20) wird in einer Richtung (I) quer zu den Gelenkstreifen (22) in Tragbänder (1) zerlegt.

24. Verfahren nach Anspruch 23, **dadurch gekennzeichnet, dass** die Tragstreifen (21) und die Gelenkstreifen (22) nach dem Mehrkomponenten-Spritzverfahren hergestellt werden.

25. Verfahren nach Anspruch 23, **dadurch gekennzeichnet, dass** die Tragstreifen (21) und die Gelenkstreifen (22) nach dem Mehrkomponenten-Extrusionsverfahren hergestellt werden.

26. Verfahren nach Anspruch 23, 24 oder 25, **dadurch gekennzeichnet, dass** die Tragstreifen (21) als Profile (23), vorzugsweise als Hohlprofile ausgebildet sind.

## Claims

1. A supporting belt (1) for a line guidance unit (2) for guiding lines, cables, **characterized in that** the supporting belt (1) has articulated sections (8), which alternate with supporting sections (3), and the supporting sections (3) and the articulated sections (8) are made of materials having different properties by the multicomponent process.

2. Supporting belt (1) according to claim (1), **characterized in that** the supporting sections (3) and the articulated sections (8) are produced according to the multicomponent injection molding method.

3. Supporting belt (1) according to claim 1, **characterized in that** the supporting sections (3) and the articulated sections (8) are produced by the multicomponent extrusion method.

4. Supporting belt (1) according to claim 1, 2 or 3, **characterized in that** the supporting sections (3) are designed as profiles (23), preferably as hollow profiles.

5. Supporting belt (1) according to one of claims 1 to 4, **characterized in that** the supporting belt (1) is formed by at least two sections (4, 5) joined together.

6. Supporting belt (1) according to claim 5, **characterized in that** the sections (4, 5) are joined together in a non-positive and/or positive manner.

7. Supporting belt (1) according to claim 5 or 6, **characterized in that** the sections (4, 5) are detachably joined together.

8. Supporting belt (1) according to one of the preceding claims, **characterized in that** the supporting sections (3) are trapezoidal and/or rhomboidal.

9. Supporting belt (1) according to one of the preceding claims, **characterized in that** the articulated sections (8) are trapezoidal and/or rhomboidal.

10. Line guidance unit (2) for guiding lines, cables or the like, whereby the line guidance unit (2) has a channel (12), which is formed at least in part by at least one supporting belt (1), **characterized in that** the supporting belt (1) has alternating supporting sections (3) and articulated sections (8), and the supporting sections (3) and the articulated sections (8) are made of materials having different properties by the multicomponent process, wherein the channel (12) is made by segments (13), which are joined to at least one supporting belt (1).

11. Line guidance unit (2) according to claim 10, **characterized in that** the supporting belt (1) is designed according to one of claims 1 through 9.

12. Line guidance unit (2) according to claim 10 or 11, **characterized in that** the segments (13) are connected to the supporting sections (3) in a non-positive and/or positive manner.

13. Line guidance unit (2) according to claim 10, 11 or 12, **characterized in that** the segments (13) are detachably connected to the supporting sections (3).

14. Line guidance unit (2) according to one of claims 10 to 14, **characterized in that** segments (13) and the supporting sections (3) have connecting means (14).

15. Line guidance unit (2) according to claim 14, **characterized in that** the segments (13) have side walls (15), and each supporting section (3) and/or at least one side wall (15) has as the connecting means (14) a recess (16) and/or a first projection (17), which are designed so that the first projection (17) engages in the recess (16).

16. Line guidance unit (2) according to claim 15, **characterized in that** at least one supporting section (3) has a bushing (25) running across the longitudinal direction of the supporting belt (1) through which at least one connecting element (18) extends, connecting the side walls (15) of a segment (13).

17. Line guidance unit (2) according to one of claims 10 to 16, **characterized in that** at least one segment (13) has side walls (15), which are connected by a transverse web (19), **in that** the side walls (15) each have a second projection (26, 26') facing each other, whereby the supporting section (3) is situated between the first transverse web (19) and the second projections (26, 26').

18. Line guidance unit (2) according to one of claims 10 to 17, **characterized in that** at least one segment (13) has side walls (15), which are connected by a second transverse web (27).

19. Line guidance unit (2) according to one of claims 10 to 8, **characterized in that** at least one segment (13) has side walls (15, 29), wherein at least one side wall (15) has a partial web (28), which faces the opposite side wall (29).

20. Line guidance unit (2) according to one of claims 10 to 19, **characterized in that** at least two adjacent segments (13, 13') each have a side wall (15, 15'), wherein at least the one side wall (15) has an overlap area (6), which overlaps with the other side wall (15').

21. Line guidance unit (2) according to claim 20, **characterized in that** the overlap area (6) is designed essentially in the form of an arc of a circle.

22. Line guidance unit (2) according to claims 10 to 21, **characterized in that** the segments (13) are connected to two supporting belts (1).

23. A method of producing a supporting belt (1), in particular a supporting belt (1) according to one of claims 1 to 11, comprising the following steps:
- a sheet (20) is formed from alternating supporting strips (21) and articulated strips (22), whereby the supporting strips (21) and the articulated strips (22) are made of materials having different properties by the multicomponent process;
- the sheet (20) is divided into supporting belts (1) in a direction (I) transverse to the articulated strips (22).

24. Method according to claim 23, **characterized in that** the supporting strips (21) and the articulated strips (22) are produced by the multicomponent injection method.

25. Method according to claim 23, **characterized in that** the supporting strips (21) and the articulated strips (22) are produced by the multicomponent extrusion method.

26. Method according to claim 23, 24 or 25, **characterized in that** the supporting strips (21) are designed as profiles (23), preferably as hollow profiles.

## Revendications

1. Courroie de support (1) pour une unité de guidage de lignes (2) pour guider des lignes, des câbles, **caractérisée en ce que** la courroie de support (1) a des sections articulées (8) qui alternent avec des sections de support (3) et les sections de support (3) et les sections articulées (8) sont formées de matériaux ayant des propriétés différentes par le procédé multicomposants.

2. Courroie de support (1) selon la revendication 1, **caractérisée en ce que** les sections de support (3) et les sections articulées (8) sont fabriquées selon le procédé de moulage par injection de multicomposants.

3. Courroie de support (1) selon la revendication 1, **caractérisée en ce que** les sections de support (3) et les sections articulées (8) sont fabriquées selon le procédé d'extrusion de multicomposants.

4. Courroie de support (1) selon la revendication 1, 2 ou 3, **caractérisée en ce que** les sections de support (3) sont réalisées comme des profils (23), de préférence comme profils creux.

5. Courroie de support (1) selon l'une des revendications 1 à 4, **caractérisée en ce que** la courroie de support (1) est formée par au moins deux sections (4, 5) reliées réciproquement.

6. Courroie de support (1) selon la revendication 5, **caractérisée en ce que** les sections (4, 5) sont reliées par coopération de forces et/ou par coopération de formes.

7. Courroie de support (1) selon la revendication 5 ou 6, **caractérisée en ce que** les sections (4, 5) sont reliées réciproquement de manière détachable.

8. Courroie de support (1) selon l'une des revendications précédentes, **caractérisée en ce que** les sections de support (3) sont trapézoïdales et/ou rhomboïdales.

9. Courroie de support (1) selon l'une des revendications précédentes, **caractérisée en ce que** les sections articulées (8) sont trapézoïdales et/ou rhomboïdales.

10. Unité de guidage de lignes (2) pour guider des lignes, des câbles ou d'autres choses semblables, dans quel cas l'unité de guidage de lignes (2) a un canal (12) qui est formé au moins partiellement par au moins une courroie de support (1), **caractérisée en ce que** la courroie de support (1) a des sections de support (3) et des sections articulées (8) qui alternent, et les sections de support (3) et les sections articulées (8) sont formées dans le procédé multicomposants de matériaux ayant des propriétés différentes, le canal (12) étant formé par des segments (13) qui sont reliés à au moins une courroie de support (1).

11. Unité de guidage de lignes selon la revendication 10, **caractérisée en ce que** la courroie de support (1) est réalisée selon l'une des revendications 1 à 9.

12. Unité de guidage de lignes (2) selon la revendication 10 ou 11, **caractérisée en ce que** les segments (13) sont reliés aux sections de support (3) par coopération de forces et/ou par coopération de formes.

13. Unité de guidage de lignes (2) selon la revendication 10, 11 ou 12, **caractérisée en ce que** les segments (13) sont reliés de manière détachable aux sections de support (3).

14. Unité de guidage de lignes (2) selon l'une des revendications 10 à 13, **caractérisée en ce que** les segments (13) et les sections de support (3) ont des moyens de liaison (14).

15. Unité de guidage de lignes (2) selon la revendication 14, **caractérisée en ce que** les segments (13) ont des parois latérales (15) et que chaque section de support (3) et/ou au moins une paroi latérale (15) a comme moyen de liaison (14) un dégagement (16) et/ou une première saillie (17) qui sont configurés de façon telle que la première saillie (17) s'engage dans le dégagement (16).

16. Unité de guidage de lignes (2) selon la revendication 15, **caractérisée en ce qu'**au moins une section de support (3) a une traversée (25) qui s'étend transversalement par rapport à la direction longitudinale de la courroie de support (1), et à travers laquelle s'étend au moins un élément de liaison (18), lequel relie les parois latérales (15) d'un segment (13).

17. Unité de guidage de lignes (2) selon l'une des revendications 10 à 16, **caractérisée en ce qu'**au moins un segment (13) a des parois latérales (15) qui sont reliées par une première traverse transversale (19), **en ce que** les parois latérales (15) ont respectivement une deuxième saillie (26, 26') qui se font face, la section de support (3) étant agencée entre la première traverse transversale (19) et les deuxièmes saillies (26, 26').

18. Unité de guidage de lignes (2) selon l'une des revendications 10 à 17, **caractérisée en ce qu'**au moins un segment (13) a des parois latérales (15), qui sont reliées par une deuxième traverse transversale (27).

19. Unité de guidage de lignes (2) selon l'une des revendications 10 à 18, **caractérisée en ce qu'**au moins un segment (13) a des parois latérales (15, 29), au moins une paroi latérale (15) présentant une traverse partielle (28), qui fait face à la paroi latérale opposée (29).

20. Unité de guidage de lignes (2) selon l'une des revendications 10 à 19, **caractérisée en ce qu'**au moins deux segments adjacents (13, 13') ont respectivement une paroi latérale (15, 15'), dans quel cas au moins une paroi latérale (15) a une région de chevauchement (6) qui chevauche l'autre paroi latérale (15').

21. Unité de guidage de lignes (2) selon la revendication 20, **caractérisée en ce que** la région de chevauchement (6) est réalisée sensiblement en forme de segment de cercle.

22. Unité de guidage de lignes (2) selon les revendications 10 à 21, **caractérisée en ce que** les segments (13) sont reliés à deux courroies de support (1).

23. Procédé destiné à la fabrication d'une courroie de support (1), notamment d'une courroie de support (1) selon l'une des revendications 1 à 11, comprenant les étapes suivantes :
- une plaque (20) est formée à partir de bandes de support (21) et de bandes articulées (22) qui alternent, dans quel cas les bandes de support (21) et les bandes articulées (22) étant formées par le procédé multicomposants de matériaux ayant des propriétés différentes ;
- la plaque (20) est démontée en courroies de support (1) en une direction (I) qui s'étend transversalement aux bandes articulées (22).

24. Procédé selon la revendication 23, **caractérisé en ce que** les bandes de support (21) et les bandes articulées (22) sont fabriquées selon le procédé de moulage par injection de multicomposants.

25. Procédé selon la revendication 23, **caractérisé en ce que** les bandes de support (21) et les bandes articulées (22) sont fabriquées selon le procédé d'extrusion de multicomposants.

26. Procédé selon la revendication 23, 24 ou 25, **caractérisé en ce que** les bandes de support (21) sont réalisées comme profils (23), de préférence comme profils creux.
